# EUROPÄISCHE PATENTSCHRIFT

(11) **EP 0 572 836 B1**
(45) Veröffentlichungstag und Bekanntmachung des Hinweises auf die Patenterteilung: **27.11.1996**
(21) Anmeldenummer: 93107859.6
(22) Anmeldetag: 14.05.1993
(51) Int. Cl.: F16K 21/04

(54) **Selbstschliessende Armatur**
Self-closing valve
Robinet à fermeture automatique

(30) Priorität: 30.05.1992 DE 4217912; 19.12.1992 DE 4243157
(43) Veröffentlichungstag der Anmeldung: 08.12.1993
(73) Patentinhaber: Behrens, Bruno, W-6000 Frankfurt/Main 71 (DE)
(72) Erfinder: Behrens, Bruno, W-6000 Frankfurt/Main 71 (DE)
(74) Vertreter: Freischem, Werner, Dipl.-Ing.

(56) Entgegenhaltungen:
- FR-A- 2 640 024
- GB-A- 421 600
- US-A- 4 258 903

## Beschreibung

Die Erfindung bezieht sich auf eine selbstschließende Armatur, mit einer aus dem Gehäuse der Armatur heraustretenden und mit einem Schließkörper verbundenen Schaltwelle, die mittels eines Handhebels um weniger als 180° drehbar ist und mit einer durch eine Schaltbewegung der Schaltwelle spannbaren Feder verbunden ist, durch welche die Schaltwelle selbsttätig in eine Ausgangsstellung rückstellbar ist, wobei die Feder eine in einem hohlen Handhebel untergebrachte, längenveränderbare Feder ist, die zwischen dem äußeren Ende des Handhebels und einem im Handhebel verschiebbar geführten Druckglied eingespannt ist.

Eine Armatur dieser Art ist bekannt aus dem Dokument US-A-4 258 903. Bei dieser Armatur stützt sich eine im Handhebel untergebrachte Schraubenfeder gegen einen ortsfesten Anschlag ab, der am inneren, der Schaltwelle nahen Ende des hohlen Handhebels angeordnet ist. Im Bereich des äußeren Endes des Handhebels befindet sich ein verschiebbar im Handhebel geführter Druckkörper, der über ein durch die Schraubenfeder hindurchgeführtes Kabel mit dem Gehäuse verbunden ist. Zwischen dem festen Anschlag und dem verschiebbaren Druckkörper ist die Schraubenfeder eingespannt. Das Kabel ist an einem im Abstand von der Schaltwelle befindlichen Punkt am Gehäuse so befestigt und über eine Kurvenbahn so abgestützt, daß beim Verschwenken des Handhebels von der Ausgangsstellung in die Endstellung das Druckstück die Feder zum Rückstellen des Handhebels, der Schaltwelle und des Schließkörpers spannt.

In vielen Fällen weist der Schließkörper dieser Armaturen eine Ausgangsstellung auf, in der sich der Schließkörper im Regelfall befindet und die nur selten kurzfristig zum Absperren oder Umleiten eines Stoffstromes verändert wird. Hierzu wird der Schließkörper von einem Bediener manuell in eine Endstellung gebracht. Diese Endstellung kann abhängig von den Anforderungen sowohl eine Öffnungs- als auch eine Schließstellung sein. Der Schwenkbereich des Handhebels ist üblicherweise durch zwei Anschläge in Ausgangs- und Endstellung begrenzt.

Bei der bekannten selbstschließenden Armatur besteht die Schwierigkeit, das Kabel derart zuverlässig am Gehäuse und am Druckkörper zu befestigen, daß auch bei größeren Verstellkräften ein Abreißen des Kabels ausgeschlossen ist. Insbesondere Armaturen mit großen Rohrleitungsdurchmessern und einer Innenwand, die aus verfahrenstechnischen Gründen mit Kunststoff beschichtet ist, benötigen eine große Schaltkraft, so daß bei diesen die Gefahr besteht, daß beim Spannen der Feder das Kabel abreißt. Damit das Kabel nicht im Bereich der Kabelbefestigung am Gehäuse durch die Schwenkbewegungen des Handhebels geknickt wird, ist es notwendig, zwischen dem Befestigungspunkt und der Schaltwelle eine bogenförmige Führung vorzusehen, auf die sich das Kabel auflegt, wenn der Handhebel von der Ausgangsstellung in die Schaltstellung geschwenkt und dabei die Rückstellfeder gespannt wird.

Es ist Aufgabe der Erfindung, eine selbstrückstellende Armatur zu schaffen, die große Schließkräfte aufzubringen vermag, einfach gestaltet, leicht montierbar und sehr betriebssicher ist.

Diese Aufgabe wird nach der Erfindung dadurch gelöst, daß das Druckglied mit einer Hubstange verbunden ist, die am Gehäuse um einen zur Schaltwelle versetzt angeordneten Anlenkpunkt schwenkbar angelenkt ist, wobei der Versatz des Anlenkpunktes gegenüber der Schaltwelle derart ist, daß in Ausgangsstellung des Handhebels der Abstand des Druckgliedes von der Schaltwelle kleiner ist als vom Anlenkpunkt und in einer Endstellung des Handhebels der Abstand des Druckgliedes von der Schaltwelle größer ist als vom Anlenkpunkt.

Während der Drehbewegung des Handhebels von der Ausgangsstellung in die Endstellung wird das Druckglied durch die Hubstange in den von der Armatur abgewandten Bereich des Handhebels gedrückt. Hierdurch wird die Feder so weit gespannt, daß ihre Kraft ausreicht, den Hebel selbsttätig in die Ausgangsstellung zurückzustellen. Vorteilhafterweise besitzt die Feder in Ausgangsstellung eine Vorspannung, damit der Hebel zuverlässig in diese Stellung zurückgestellt wird. Der Schaltweg des Handhebels sollte durch Anschläge in Ausgangs- und Endstellung begrenzt sein, so daß die beiden Handhebelstellungen genau definiert sind und der Handhebel nicht durch die vorgespannte Feder oder durch den Bediener überdreht werden kann. Diese Anschläge können aus einem entsprechend ausgeformten Gehäuse der Armatur oder aus zusätzlichen, an dem Gehäuse befestigten Bauteilen bestehen.

Der Handhebel dreht sich im Laufe des Schaltvorgangs um die Achse der Schaltwelle, während die Hubstange um den zur Schaltwelle versetzt angeordneten Anlenkpunkt verschwenkt wird. Hieraus ergibt sich ein während der Schaltbewegung veränderlicher Winkel Hubstange und Handhebel. Der Durchlass, durch den die Hubstange in den hohlen Handhebel eingeführt ist, muß so groß sein, daß die Hubstange trotz der Relativbewegung zwischen Hubstange und Handhebel nicht mit diesem in Berührung kommen kann.

Durch den veränderlichen Winkel zwischen Hubstange und Handgriff ergibt sich die Notwendigkeit, daß zwischen den Bauteilen Hubstange, Druckglied, Feder und Handhebel ein Gelenk oder eine gelenkige Lagerung angeordnet ist. Dies kann eine um einige Grad schwenkbare Lagerung einer Gasfedereinheit sein, so daß während der gesamten Schaltbewegung die Gasfedereinheit und die Hubstange miteinander fluchten. Bei dieser Lagerung kann die Hubstange, das Druckglied und die Gasfeder von einer handelsüblichen, zum Beispiel aus dem Automobilbau bekannten, Gasfedereinheit bestehen. Diese Gasfedereinheiten sind industrielle Massenartikel und daher besonders kostengünstig zu beziehen.

Eine andere Möglichkeit ist eine gelenkige Verbindung zwischen Hubstange und Druckglied oder bei starrer Verbindung von Hubstange und Druckglied eine verschwenkbare Lagerung des im hohlen Handhebel verschiebbar geführten Druckgliedes. Bei dieser Ausführung ist das Druckglied ballig ausgeführt, so daß es sich im hohlzylindrischen Handgriff verschwenken läßt.

Eine vorteilhafte Ausführung des Handhebels besteht aus einem der Schaltwelle zugewandten Hebelteil, einem Versatzstück und einem Handgriff. Durch das Versatzstück weist der Handhebel zweckmäßigerweise einen so großen Versatz in Richtung der Hubstange auf, daß in Ausgangs- und Endstellung der Handgriff, die Feder sowie die Hubstange miteinander fluchten. Ein Vorteil dieser Anordnung liegt in der günstigen räumlichen Anordnung der einzelnen Bauteile. Durch den Versatz kann die Hubstange die beim Schalten erforderliche Schwenkbewegung innerhalb der offenen Stirnseite des Handgriffs ausführen. Hierdurch wird die Verletzungsgefahr für den Bediener im Verhältnis zu einer seitlich in den Handgriff eingeführten Hubstange, zum Beispiel durch Quetschungen zwischen Handgriff und Hubstange, reduziert. Die notwendige Länge des Handgriffs wird verringert, da auch der Bereich des Handgriffs, in dem das Druckglied und die Kolbenstange geführt ist, als Grifffläche ausgebildet werden kann.

Ein weiterer Vorteil dieser Anordnung liegt in einem günstigen Verlauf des auf die Schaltwelle wirkenden Rückstellmoments. Da bei nicht paralleler Anordnung von Handhebel und Hubstange die Umsetzung der Federkraft in das Rückstellmoment weniger effektiv ist als bei der parallelen Anordnung, sollten Hubstange und Handhebel in Ausgangs- und Endstellung parallel angeordnet sein, da in Endstellung der Handhebel bei Beginn der Rückstellbewegung beschleunigt werden muß und in Endstellung die Federkraft geometriebedingt nachläßt.

Weitere Einzelheiten und Vorteile der Erfindung gehen aus der folgenden Beschreibung hervor, in der unter Bezugnahme auf die Zeichnung ein Ausführungsbeispiel der Armatur näher erläutert ist.

Es zeigen in der Zeichnung die
- Fig. 1: eine Draufsicht auf eine Armatur in Ausgangsstellung,
- Fig. 2: eine Draufsicht auf die Armatur aus Fig. 1 in einer mittleren Handhebelstellung,

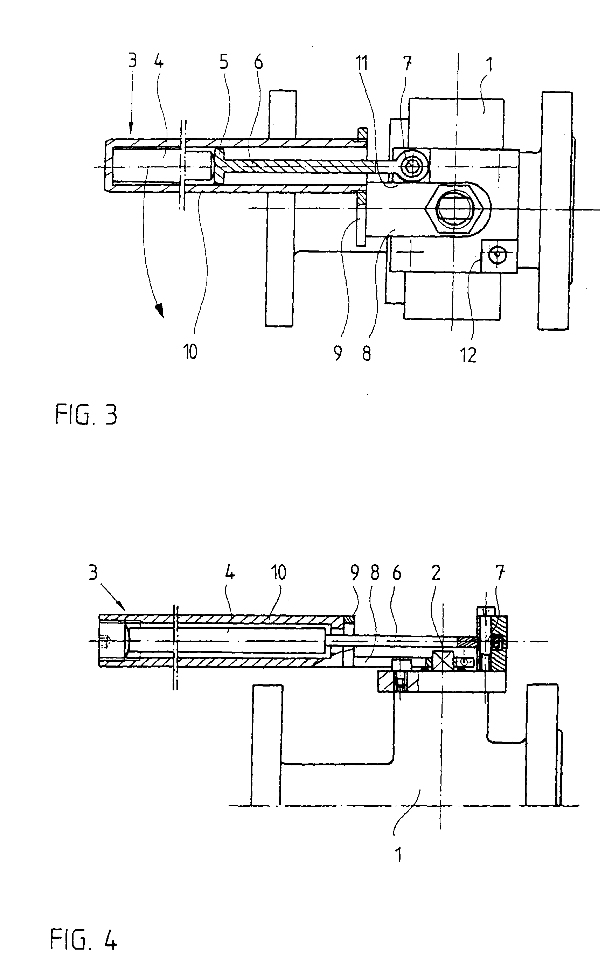

- Fig. 3: eine Draufsicht auf die Armatur aus Fig. 1 in Endstellung,
- Fig. 4: eine Seitenansicht einer Armatur.

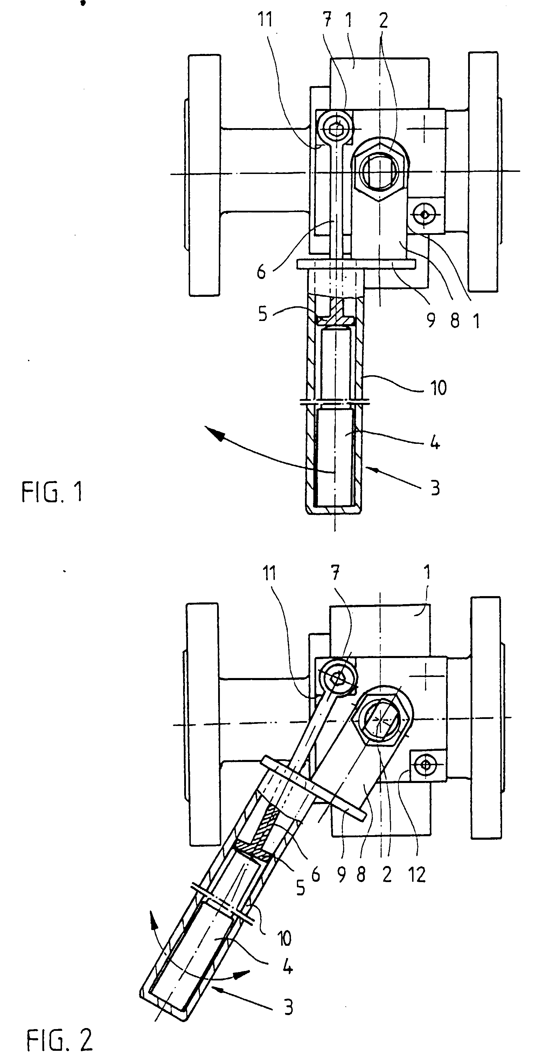

In Fig. 1 ist eine Armatur dargestellt, die einen Handhebel 3 aufweist, der aus einem der Schaltwelle 2 zugewandten Hebelteil 8, einem Versatzstück 9 und einem hohlen Handgriff 10 besteht. Der Handgriff 10 ist ein einseitig offener Hohlzylinder, der in eine an dem Versatzstück angeordnete Gewindebohrung eingeschraubt ist. Das Gehäuse 1 der Armatur weist gemäß DIN 5211 zum Anschluß von Anbauteilen zentrisch zur Schaltwelle 2 einen Flansch 15 auf, der mit vier Gewindebohrungen versehen ist. Die Hubstange 6 weist armaturenseitig eine Öse auf und ist durch einen Gewindebolzen, der in eine der an dem Flansch angeordneten Gewindebohrungen eingeschraubt ist und durch die Öse geführt ist, gelenkig am Gehäuse 1 gelagert. Zwischen dem Flansch 15 und der Hubstange 6 ist ein Distanzstück angeordnet, durch das der Abstand der Hubstange 6 vom Flansch 15 festgelegt ist, daß heißt die Hubstange 6 in axialer Richtung des Gewindebolzens gelagert ist. Der Versatz des Handhebels 3 ist gerade so groß, daß in Ausgangs- und Endstellung Handhebel 3 und Hubstange 6 miteinander fluchten.

Das Distanzstück ist an seiner, dem in Endstellung befindlichen Handgriff 10 zugewandten Seite so ausgebildet, daß es einen Anschlag in Endstellung 11 bildet. Der Anschlag in Ausgangsstellung 12 wird von einem in den Flansch eingeschraubten Bauteil gebildet. Bei entsprechend geformten Handhebel 3 kann dieses Bauteil auch nur eine Schraube sein. Das in die Hubstange 6 hineinragende Ende des Handgriffs 10 ist einstückig mit einem Druckglied 5 verbunden, das eine Gasfeder zwischen sich und dem der Armatur abgewandten Ende des Handgriffs 10 einklemmt.

Das Druckglied 5 weist zur dreh- und verschiebbaren Führung eine ballige, an der inneren Mantelfläche des zylindrischen Handgriffs 10 anliegende Oberfläche auf. Damit das Druckglied 5 während der Schwenkbewegung auf der Feder 4 abrollen kann weist die Gasfeder eine ballige Stirnseite auf.

Alternativ zur Gasfeder ist auch die Verwendung einer Schraubenfeder möglich. Diese kann mit einem großen Spiel im Handgriff 10 geführt sein und wegen der fehlenden Zentrierung die Funktion des Gelenks übernehmen, so daß die Stirnseite der Schraubenfeder an dem während der Drehbewegung des Handgriffs 10 verschwenkenden Druckglied 5 ununterbrochen ganzflächig anliegt. Eine andere Ausführung weist eine nur verschiebbare und nicht verschwenkbare Führung des Druckgliedes 5 auf, das über ein Gelenk mit der Hubstange 6 verbunden ist. Es steht dann eine zur Feder 4 rechtwinklige, dem Federdurchmesser entsprechende Anlagefläche zwischen Feder 4 und Druckglied 5 während der gesamten Schwenkbewegung zur Verfügung.

In Fig. 4 ist eine Ausführungsform der Armatur dargestellt, bei der die Hubstange 6, das Druckglied 5 und die Feder 4 von einer Gasfedereinheit gebildet sind. Die Feder 4 ist gelenkig an dem der Schaltwelle 2 abgewandten Ende des Handgriffs 10 gelagert. Der Handhebel 3 weist wie die in Fig. 1 dargestellte Ausführungsform einen Versatz auf. Der Handgriff 10 besteht aus einem beidseitig offenen Hohlzylinder, der an einer Stirnseite an dem Versatzstück 9 befestigt ist. Das dem Versatzstück 9 gegenüberliegende Ende des Handgriffs 10 weist ein Innengewinde auf, in das ein Gewindebolzen eingeschraubt ist, der an der Berührungsfläche mit der Gasfeder eine ballige Oberfläche aufweist. Vorteilhaft bei dieser Ausführung ist die Einstellbarkeit der Vorspannung der Feder 4, sowie die einfache Möglichkeit der Demontage der Gasfedereinheit zu Prüf- oder Wartungszwecken.

Alternativ können das Gehäuse der Gasfeder und der Handgriff 10 einstückig miteinander verbunden sein, so daß die Gasfeder an dem Versatzstück 9 befestigt ist und das Gehäuse als Handgriff 10 ausgebildet ist. In diesem Fall können zwei Bauteile entfallen, so daß die Armatur kostengünstiger wird. Vorraussetzung hierfür ist jedoch, daß die Hubstange 6 innerhalb der Gasfeder ausreichend gelenkig gelagert ist, damit die aus der Schwenkbewegung resultierende, oben beschriebenen Winkeländerung zwischen Hubstange 6 und Handhebel 3 möglich ist.

### Bezugszeichenliste:

- 1: Gehäuse
- 2: Schaltwelle
- 3: Handhebel
- 4: Feder
- 5: Druckglied
- 6: Hubstange
- 7: Anlenkpunkt
- 8: der Schaltwelle zugewandter Hebelteil
- 9: Versatzstück
- 10: Handgriff
- 11: Anschlag in Endstellung
- 12: Anschlag in Ausgangsstellung

## Patentansprüche

1. Selbstschließende Armatur, mit einer aus einem Gehäuse (1) der Armatur heraustretenden und mit einem Schließkörper verbundenen Schaltwelle (2), die mittels eines Handhebels (3) um weniger als 180° drehbar ist und die mit einer durch eine Schaltbewegung der Schaltwelle (2) spannbaren Feder (4) verbunden ist, durch welche die Schaltwelle (2) selbsttätig in eine Ausgangsstellung rückstellbar ist, wobei die Feder (4) eine in einem hohlen Handhebel (3) untergebrachte, längenveränderbare Feder (4) ist, die zwischen dem äußeren Ende des Handhebels (3) und einem im Handhebel verschiebbar geführten Druckglied (5) eingespannt ist, **dadurch gekennzeichnet,** daß das Druckglied (5) mit einer Hubstange (6) verbunden ist, die am Gehäuse (1) um einen zur Schaltwelle (2) versetzt angeordneten Anlenkpunkt (7) schwenkbar angelenkt ist, wobei der Versatz des Anlenkpunktes (7) gegenüber der Schaltwelle (2) derart ist, daß in Ausgangsstellung des Handhebels (3) der Abstand des Druckgliedes (5) von der Schaltwelle (2) kleiner ist als vom Anlenkpunkt (7) und in einer Endstellung des Handhebels der Abstand des Druckgliedes (5) von der Schaltwelle (2) größer ist als vom Anlenkpunkt (7).

2. Armatur nach Anspruch 1, dadurch gekennzeichnet, daß das Druckglied (5) eine ballige Außenkontur aufweist sowie verschwenkbar im Handhebel (3) geführt und einstückig mit der Hubstange (6) verbunden ist.

3. Armatur nach Anspruch 1, dadurch gekennzeichnet, daß das Druckglied (5) axial im Handhebel (3) geführt ist und über ein Gelenk um eine parallel zur Schaltwelle (2) verlaufende Achse schwenkbar mit der Hubstange (6) verbunden ist.

4. Armatur nach Anspruch 1, dadurch gekennzeichnet, daß die Hubstange (6), ein mit der Hubstange (6) einstückig verbundenes Druckglied (5) und die Feder (4) von einer handelsüblichen Gasfedereinheit gebildet sind, und die Gasfedereinheit um kleine Winkel schwenkbar im Handhebel (3) gehalten ist.

5. Armatur nach einem der Ansprüche 1 bis 4, dadurch gekennzeichnet, daß sich der Handhebel (3) aus einem der Schaltwelle (2) zugewandten Hebelteil (8), einem Versatzstück (9) und einem aus einem Hohlzylinder bestehenden Handgriff (10) zusammensetzt und der Handgriff (10) mit seiner Längsachse zum Hebelteil (8) derart versetzt ist, daß die Längsachsen des Handgriffs (10) und der Hubstange (6) sowie der Anlenkpunkt (7) in Ausgangsstellung und Endstellung des Handhebels (3) miteinander fluchten.

6. Armatur nach einem der Ansprüche 1 bis 4, dadurch gekennzeichnet, daß die Längsachse des Handhebels (3) die Achse der Schaltwelle (2) schneidet und daß zum Durchlass der Hubstange (6) seitlich am hohlen Handgriff (10) ein Schlitz angeordnet ist.

7. Armatur nach einem der Ansprüche 1, 3, 5 oder 6, dadurch gekennzeichnet, daß die Feder (4) eine Schraubenfeder ist.

8. Armatur nach einem der Ansprüche 1 bis 7, dadurch gekennzeichnet, daß die Schaltbewegung des Handhebels (3) durch Anschläge in Endstellung (11) und in Ausgangsstellung (12) begrenzt ist.

## Claims

1. Self-closing valve, with a control shaft (2) which emerges from a housing (1) of the valve and is connected to a closing body, and which by means of a hand lever (3), can be rotated through less than 180° and is connected to a spring (4) which can be stretched by a control movement of the control shaft (2), and by which the control shaft (2) can be automatically reset to an initial position, wherein the spring (4) is a spring (4) which is accommodated in a hollow lever (3) and is variable in length and which is clamped between the outer end of the hand lever (3) and a compression member (5) which is shiftably led in the hand lever, characterised in that the compression member (5) is connected to a lift rod (6) which is linked to the housing (1) so as to be swivellable about a linkage point (7) which is staggered in relation to the control shaft (2), whereby the staggering of the linkage point (7) in relation to the control shaft (2) is such that in the initial position of the hand lever (3), the spacing of the compression member (5) from the control shaft (2) is smaller than from the linkage point (7), and in an end position of the hand lever, the spacing of the compression member (5) from the control shaft (2) is larger than from the linkage point (7).

2. Valve as claimed in Claim 1, characterised in that the compression member (5) has a cambered outer contour and is also swivellably led in the hand lever (3), and is connected as one piece to the lift rod (6).

3. Valve as claimed in Claim 1, characterised in that the compression member (5) is led axially in the hand lever (3) and is swivellably connected to the lift rod (6) via a hinged joint about an axis which runs parallel to the control shaft (2).

4. Valve as claimed in Claim 1, characterised in that the lift rod (6) is a compression member (5) which is connected as one piece to the lift rod (6), and the spring (4) is formed from a gas spring unit in normal commercial use, and the gas spring unit is retained in the hand lever (3) so as to be swivellable through small angles.

5. Valve as claimed in one of the Claims 1 to 4, characterised in that the hand lever (3) is composed of a lever member (8) which is turned towards the control shaft (2), a staggered piece (9) and a handle (10) consisting of a hollow cylinder, and the handle (10) is staggered with its longitudinal axis towards the lever member (8) in such a way that the longitudinal axes of the handle (10) and of the lift rod (6) and also the linkage point (7) are flush with each other in the initial and end position of the hand lever (3).

6. Valve as claimed in one of the Claims 1 to 4, characterised in that the longitudinal axis of the hand lever (3) intersects the axis of the control shaft (2) and that a slot is arranged on the side of the hollow handle (10) to allow the lift rod (6) to pass through.

7. Valve as claimed in Claims 1, 3, 5 or 6, characterised in that the spring (4) is a helical spring.

8. Valve as claimed in one of the Claims 1 to 7, characterised in that the control movement of the hand lever (3) is limited by stops in the end position (11) and in the initial position (12).

## Revendications

1. Robinet à fermeture automatique doté d'une tige de manoeuvre (2) sortant d'une enveloppe (1) et reliée à un dispositif de fermeture, susceptible d'être entraînée en rotation selon un angle inférieur à 180° au moyen d'un levier à main (3) et qui est reliée à un ressort de rappel (4) susceptible d'être armé par actionnement de la tige de manoeuvre (2) grâce auquel la tige de manoeuvre (2) peut être ramenée automatiquement à sa position initiale, le ressort (4) étant un ressort de longueur variable (4) logé à l'intérieur d'un levier à main (3) et tendu entre l'extrémité extérieure du levier à main (3) et une pièce de pression (5) guidée en translation à l'intérieur du levier à main, caractérisé en ce que la pièce de pression (5) est solidaire d'une biellette (6) fixée tout en pouvant pivoter sur l'enveloppe (1) en un point d'articulation (7) déporté par rapport à la tige de manoeuvre (2), le déport du point d'articulation (7) par rapport à la tige de manoeuvre (2) étant tel que lorsque le levier à main (3) est en position initiale, la distance qui sépare la pièce de pression (5) de la tige de manoeuvre (2) est inférieure à sa distance au point d'articulation (7) et lorsque le levier à main est en position finale, la distance qui sépare la pièce de pression (5) de la tige de manoeuvre (2) est supérieure à sa distance au point d'articulation.

2. Robinet selon la revendication 1, caractérisé en ce que la pièce de pression (5) présente un contour extérieur de forme convexe, en ce qu'il est guidé de façon à pouvoir osciller à l'intérieur du levier à main (3) et en ce qu'il ne forme qu'une seule pièce avec la biellette (6).

3. Robinet selon la revendication 1, caractérisé en ce que la pièce de pression (5) est guidée axialement à l'intérieur du levier à main (3), et en ce qu'elle est reliée à la biellette (6) par l'intermédiaire d'une articulation, en pouvant osciller autour d'un axe parallèle à la tige de manoeuvre (2).

4. Robinet selon la revendication 1, caractérisé en ce que la biellette (6) et le ressort (4) sont constitués respectivement par une pièce de pression (5) faisant partie intégrante de la biellette (6) et par un amortisseur pneumatique classique du commerce, l'amortisseur pneumatique étant monté à l'intérieur du levier à main (3) avec un léger débattement angulaire.

5. Robinet selon l'une quelconque des revendications 1 à 4, caractérisé en ce que le levier à main (3) est constitué par une partie levier (8) située du côté de la tige de manoeuvre (2), une pièce désaxée (9) et une poignée (10) constituée par un cylindre creux et en ce que l'axe longitudinal de la poignée (10) est désaxé de telle sorte que les axes longitudinaux respectifs de la poignée (10) et de la biellette (6) soient confondus et alignés avec le point d'articulation (7) lorsque le levier à main (3) est en position initiale et en position finale.

6. Robinet selon l'une quelconque des revendications 1 à 4, caractérisé en ce que l'axe longitudinal du levier à main (3) et l'axe de la tige de manoeuvre (2) sont sécants et en ce qu'une lumière est prévue latéralement sur la poignée creuse (10) pour le passage de la biellette (6).

7. Robinet selon l'une quelconque des revendications 1, 3, 5 ou 6, caractérisé en ce que le ressort (4) est un ressort hélicoïdal.

8. Robinet selon l'une quelconque des revendications 1 à 7, caractérisé en ce que la course utile du levier à main (3) est limitée par des butées en position finale (11) et en position initiale (12).
